# EUROPEAN PATENT SPECIFICATION

(11) **EP 3 958 444 B1**
(45) Date of publication and mention of the grant of the patent: **13.08.2025**
(21) Application number: 19939231.7
(22) Date of filing: 17.10.2019
(51) Int. Cl.: H02K 11/00, H02K 5/173, H02K 5/15, H02K 5/08

(54) **BRUSHLESS MOTOR AND ELECTRICAL DEVICE**
BÜRSTENLOSER MOTOR UND ELEKTRISCHE VORRICHTUNG
MOTEUR SANS BALAIS ET DISPOSITIF ÉLECTRIQUE

(30) Priority: 26.07.2019 CN 201910683981
(43) Date of publication of application: 23.02.2022
(73) Proprietor: Guangdong Welling Motor Manufacturing Co., Ltd., Foshan, Guangdong 528311 (CN)
(72) Inventor: LI, Guoxiong, Foshan, Guangdong 528311 (CN); HUANG, Chengdong, Foshan, Guangdong 528311 (CN); ZENG, Luqiang, Foshan, Guangdong 528311 (CN); LI, Hu, Foshan, Guangdong 528311 (CN); LV, Jifang, Foshan, Guangdong 528311 (CN); ZHONG, Guilie, Foshan, Guangdong 528311 (CN); LV, Yuchan, Foshan, Guangdong 528311 (CN)
(74) Representative: Whitlock, Holly Elizabeth Ann
(86) International application number: PCT/CN2019/111662
(87) International publication number: WO 2021/017189

(56) References cited:
- CN-A- 1 825 735
- CN-A- 108 768 091
- CN-A- 108 964 335
- CN-U- 203 193 434
- CN-U- 208 608 816
- US-A1- 2006 220 474
- US-A1- 2012 038 229
- US-A1- 2016 248 296

## Description

### TECHNICAL FIELD

This application relates to the field of motors, and more particularly to a brushless motor and an electrical equipment adopting the brushless motor.

### BACKGROUND

In recent years, due to the energy-saving trend of the air-conditioning units, high-efficiency brushless DC motors have been used to replace induction motors to drive blowers. These brushless DC motors are generally driven by inverters, which adopt a pulse width modulation (hereinafter referred to as PWM) method as a driving method. When using the PWM driving method, a common mode voltage is always generated because that the neutral point potential of the winding is not zero. In the case of high frequency, a voltage between the inner ring and outer ring of the bearing (bearing capacitor branch) is generated by the common mode voltage via a loop, which is formed by the coupling capacitors generated between various structural parts of the motor, including the stator, the rotor, the rotor core, the bearing bracket, and the bearing capacitors. This voltage between the inner ring and the outer ring of the bearing caused by the common mode voltage is called shaft voltage. The shaft voltage contains the high-frequency components of the high-speed switching action of the semiconductor during PWM driving. If the shaft voltage reaches the insulation breakdown voltage of the lubricating oil film inside the bearing, the current will be generated due to discharge, resulting in local erosion between the inner surface and the balls of the bearing, that is, electric corrosion (also called electric erosion) occurring inside the bearing. When the electric corrosion is aggravated, wave-shaped abrasion will occur inside the bearing, such as the inner ring, outer ring or balls of the bearing, causing abnormal noise and decrease in the service lift of the bearing. US2012/0038229A1 relates to a motor and electrical equipment equipped with the same and discloses a brushless motor having a discrete capacitor connected between a stator core and bearing bracket of the motor. US2016/0248296A1 relates to an electric motor and electric device equipped with the same and discloses a brushless motor having conductive patterns wherein the conductive patterns are connected to a ground line and an outer ring conducting part of a bearing. CN 108964335A relates to a structure for reducing shaft voltage of an electric motor and discloses connecting an end cap of a motor to a stator via a conducting wire and connectors.

### TECHNICAL PROBLEMS

An object of embodiments of the present application is to provide a brushless motor to solve the problem in the related arts that excessively high shaft voltage of the brushless motor causes electric erosion of the bearing.

### TECHNICAL SOLUTIONS

The invention is set out in the appended set of claims. In order to achieve the object, the following technical solutions are adopted by the present application: a brushless motor, comprising: a casing having an insulating property; a stator fixed within the casing; and a rotor rotatably arranged within the stator. The stator comprises a stator core and a winding wound around the stator core. The rotor comprises a rotor core and a shaft passing through the rotor core. Two bearings are sleeved on the shaft at positions corresponding to two ends of the rotor core, respectively, and two bearing brackets are installed at two ends of the casing for fixing the two bearing. A first conductive sheet and a second conductive sheet are arranged between at least one of the two bearing brackets and the stator core, and are configured to cooperate to balance a potential of an inner ring and a potential of an outer ring of each of the two bearings. The first conductive sheet and the second conductive sheet are aligned side by side and spaced apart from each other. The first conductive sheet is in electrical connection with the stator core, and the second conductive sheet is in electrical connection with an adjacent bearing bracket. A supporting board is configured to support the first conductive sheet and the second conductive sheet and the supporting board is fixed at the casing, and wherein the supporting board is provided with a first conductive pad and a second conductive pad (164), the first conductive pad is electrically connected to the first conductive sheet, and the second conductive pad is electrically connected to the second conductive sheet, a first electrical contact and a second electrical contact are installed at the casing, the first electrical contact is configured to connect with the first conductive pad, and the second electrical contact is configured to connect with the second conductive pad, the first electrical contact is in electrical connection with the stator core, and the second electrical contact is in electrical connection with the adjacent bearing bracket.

Another object of the present application is to provide an electrical equipment, including the brushless motor as described in the above.

### BENEFICIAL EFFECTS

The above one or more technical solutions in embodiments of the present application have at least one of the following technical effects:

The first conductive sheet in electrical connection with the stator core, and the second conductive sheet in electrical connection with the bearing bracket are arranged within the brushless motor. The first conductive sheet and the second conductive sheet are aligned side by side and spaced apart from each other, such that the first conductive sheet and the second conductive sheet can cooperate to adjust a capacitive reactance between the stator core and the bearing bracket, so as to balance a potential of an inner ring and a potential of an outer ring of each of the two bearings. In this way, a potential difference between the inner ring and the outer ring of each of the two bearings is decreased, and in turn the shaft voltage is decreased, thereby avoiding the electric erosion of the bearing.

### BRIEF DESCRIPTION OF THE DRAWINGS

In order to more clearly illustrate the technical solutions in the embodiments of the present application, the drawings that need to be used in the description of the embodiments or the exemplary art will be briefly described herein below. The accompanying drawings in the following description are only some embodiments of the present application. For those skilled in the art, other drawings can be obtained based on these drawings without creative work. All of the embodiments in paragraphs 9 to 87 of the detailed description relate to the present invention.
FIG. 1 is a cross sectional schematic structural view of a first brushless motor according to an embodiment of the present application;
FIG. 2 is a schematic structural view of a first brushless motor according to an embodiment of the present application;
FIG. 3 is a schematic structural view of the brushless motor of FIG. 2 with a printed circuit board removed;
FIG. 4 is a schematic structural view of a stator and a casing of the brushless motor of FIG. 3;
FIG. 5 is a schematic structural view of the printed circuit board installed within the casing of the brushless motor of FIG. 2;
FIG. 6 is a schematic structural view of an assembled stator and first bracket of the brushless motor of FIG. 2;
FIG. 7 is a schematic structural view of a first electrical contact of FIG. 6;
FIG. 8 is a schematic structural view of a second electrical contact of FIG. 6;
FIG. 9 is a first schematic structural view of the printed circuit board of the brushless motor of FIG. 2;
FIG. 10 is a second schematic structural view of the printed circuit board of the brushless motor of FIG. 2;
FIG. 11 is a cross sectional schematic structural view of a second brushless motor, with a first conductive sheet and a second conductive sheet installed on a supporting board, according to an embodiment of the present application;
FIG. 12 is a cross sectional schematic structural view of a third brushless motor, with a first conductive sheet and a second conductive sheet installed on a supporting board, according to an embodiment of the present application;
FIG. 13 is a cross sectional schematic structural view of a fourth brushless motor, with a first conductive sheet and a second conductive sheet installed on a supporting board, according to an embodiment of the present application;
FIG. 14 is a cross sectional schematic structural view of a fifth brushless motor according to an embodiment of the present application;
FIG. 15 is a cross sectional schematic structural view of a sixth brushless motor according to an embodiment of the present application;
FIG. 16 is a cross sectional schematic structural view of a seventh brushless motor according to an embodiment of the present application;
FIG. 17 is a cross sectional schematic structural view of an eighth brushless motor according to an embodiment of the present application; and
FIG. 18 is a cross sectional schematic structural view of a ninth brushless motor according to an embodiment of the present application.

In the drawings, the following reference numerals are adopted:
100: Brushless motor; 11: Casing; 111: Conductive piece; 12: Stator; 121: Stator core; 122: Winding; 123: Insulating skeleton; 124: Sealing board; 125: Plastic package end face; 126: Insertion pin; 13: rotor; 131: Shaft; 132: Rotor core; 14: Bearing; 15: Bearing bracket; 151: First bracket; 152: Second bracket; 16: Supporting board; 161: Printed circuit board; 162: Drive circuit; 163: First conductive pad; 164: Second conductive pad; 21: First conductive sheet; 211: First electrical regions; 212: First connecting regions; 213: First lead wire; 214: First insulating protective layer; 215: First insulating layer; 22: Second conductive sheet; 221: Second electrical regions; 222: Second connecting regions; 223: Second lead wire; 224: Second insulating protective layer; 225: Second insulating layer; 23: Dielectric layer; 24: First electrical contact; 241: First insertion part; 242: First conductor part; 243: First electrically conductive part; 244: First protrusion; 25: Second electrical contact; 251: Second insertion part; 252: Second conductor part; 253: Second electrically conductive part; 254: Second protrusion; 26: Adhesive layer; 27: Metal connecting needle; and 28: Elastic conductive pin.

### DETAILED DESCRIPTION OF THE EMBODIMENTS

In order to make the purposes, technical solutions, and advantages of the present application clearer and more understandable, the present application will be further described in detail hereinafter with reference to the accompanying drawings and embodiments. It should be understood that the embodiments described herein are only intended to illustrate but not to limit the present application.

It should be noted that when an element is described as "fixed" or "arranged" on/at another element, it means that the element can be directly or indirectly fixed or arranged on/at another element. When an element is described as "connected" to/with another element, it means that the element can be directly or indirectly connected to/with another element. Moreover, terms like "first" and "second" are only used for the purpose of description, and will in no way be interpreted as indication or hint of relative importance or implicitly indicate the number of the referred technical features. Thus, the features prefixed by "first" and "second" will explicitly or implicitly represent that one or more of the referred technical features are included. In the description of the present application, "multiple"/ "a plurality of" refers to the number of two or more than two, unless otherwise clearly and specifically defined. The meaning of "several" is one or more than one, unless otherwise specifically defined. It should be understood that terms "center", "length", "width", "thickness", "upper", "lower", "front", "rear", "left", "right", "vertical", "horizontal", "top", "bottom", "inside", "outside" and the like indicating orientation or positional relationship are based on the orientation or the positional relationship shown in the drawings, and are merely for facilitating and simplifying the description of the present application, rather than indicating or implying that a device or component must have a particular orientation, or be configured or operated in a particular orientation, and thus should not be construed as limiting the application. In the present application, unless otherwise specifically stipulated and defined, terms like "install", "connect", "couple", "fix" should be construed broadly, for example, they may indicate a fixed connection, a detachable connection, or an integral as a whole; may be a mechanical connection, or an electrical connection; may be in direct connection, or indirect connection via an intermediate, and may also reflect internal communication of two elements or interactions between two elements. For those skilled in the art, the specific meanings of the above terms in the present application can be understood according to specific conditions.

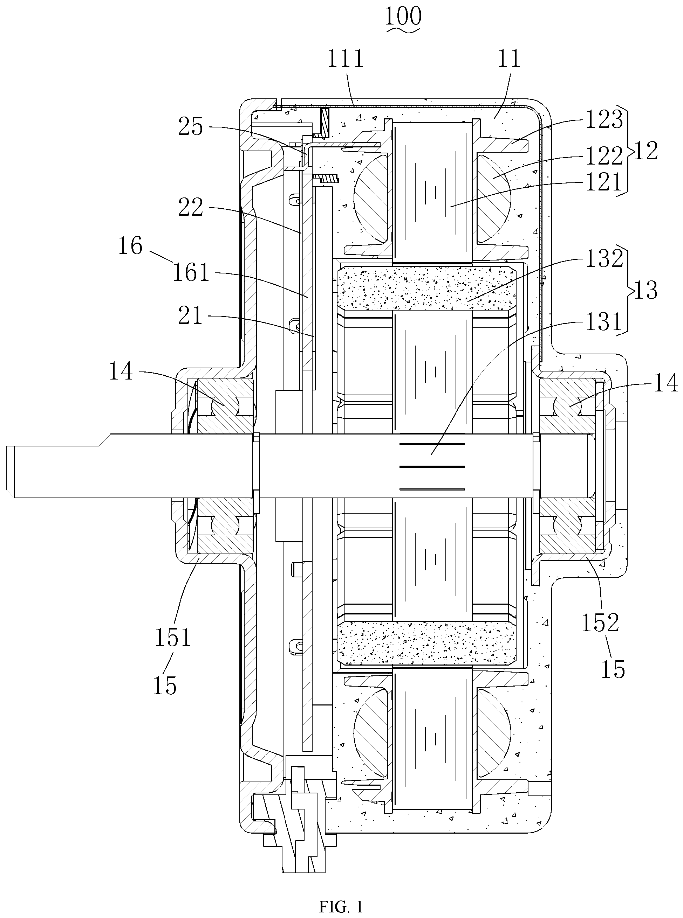

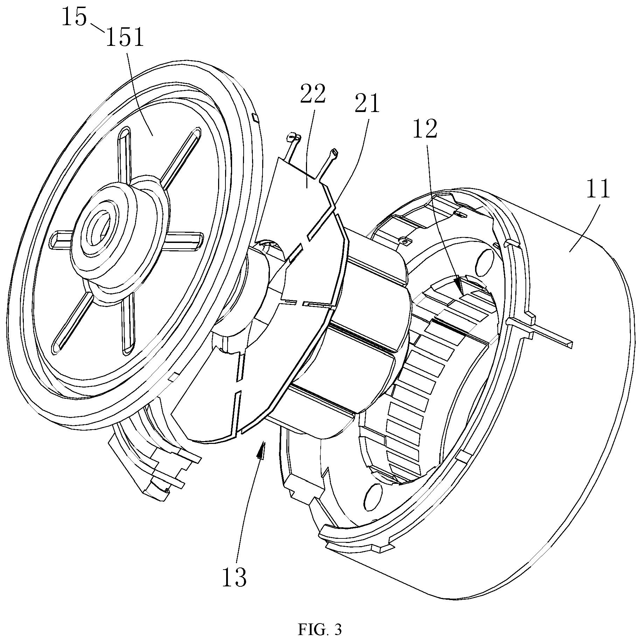

A brushless motor 100 provided by the present application is described hereinbelow with reference to FIG. 1 and FIG. 3. The brushless motor 100 comprises: a casing 11, a stator 12, a rotor 13, two bearings 14, and two bearing brackets 15. Both the stator 12 and the rotor 13 are installed in the casing 11, and the stator 12 is configured to drive the rotor 13 to rotate. The two bearings 14 are installed at the rotor 13 to support the rotor 13. The two bearing brackets 15 support the two bearings 14, respectively, thereby supporting the rotor 13. In the meanwhile, the two bearing brackets 15 are installed at two ends of the casing 11, respectively, so as to support the rotor 13 within the casing 11 and enabling the rotor 13 to flexibly rotate. The use of the bearing brackets 15 to support the bearings 14 can achieve more stable supporting of the bearings 14, thereby ensuring excellent rotation of the bearings 14.

The casing 11 has insulating property, and plays the main role of support and protection. The casing 11 can be injection-molded using a resin material, which can facilitate processing and manufacture, and can have good insulation effect. In addition, the casing 11 can also dissipate heat. It can be understood that in order to improve the heat dissipation efficiency, some heat dissipation fins can be arranged on the casing 11.

The stator 12 comprises a stator core 121 and a winding 122. The winding 122 is wound on the stator core 121. When a current passes through the winding 122, a magnetic field is generated, and the magnetic field is reinforced and guided by the stator core 121. The stator core 121 is formed by stacking a plurality of the silicon steel sheets to reduce eddy currents. The stator core 121 generally comprises a plurality of tooth-like structures, and the winding 122 is wound on the respective teeth. These tooth-like structures are enclosed to for a circular shape, which enables the rotor to be arranged within the stator 12 and to be driven to rotate.

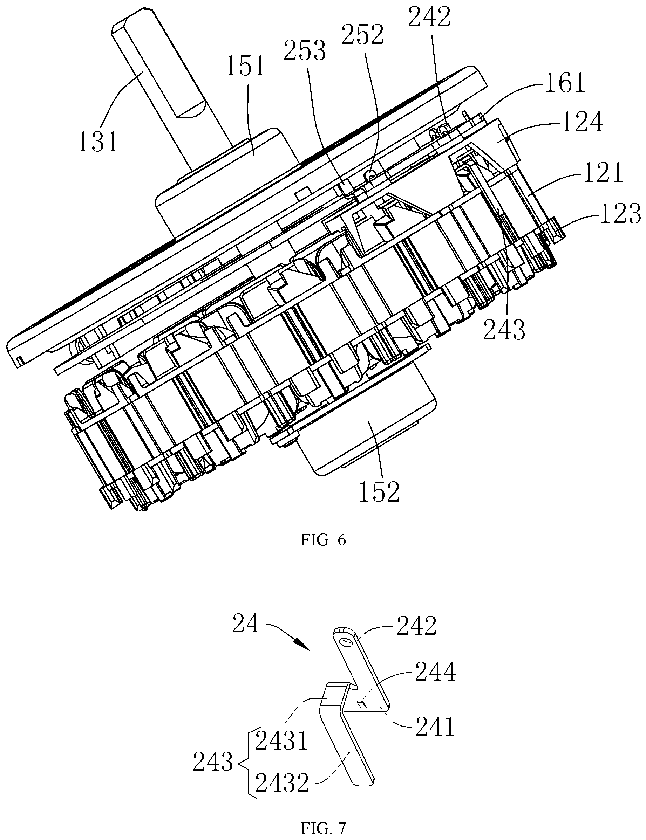

As shown in FIG. 6, in order to realize a firm connection between the winding 122 and the stator core 121 as well as facilitate the installation of the winding 122 on the teeth of the stator core, an insulating skeleton 123 can be provided to support the winding, and the insulating skeleton 123 is fixed on the stator core 121. It can be understood that, to facilitate the connection between the driver circuit and the winding 122, a lead end of the winding 122 can be fixed on the insulating skeleton 123, so that it is convenient to realize the connection with the drive circuit.

Furthermore, in an embodiment, a sealing board 124 may be arranged on the insulating skeleton 123, and the sealing board 124 is preferably made of an insulating material to fix the lead terminals of the winding 122 on the sealing board 124, thereby facilitating It is electrically connected to the drive circuit 162, or a wire is conveniently drawn out to be electrically connected to the external drive circuit. In other words, the drive circuit 162 can be set in the casing 11, or an external drive circuit can be set, which is connected to the external drive circuit through a wire.

Preferably, the drive circuit 162 can be arranged inside the casing 11 to reduce the volume, improve the integration, and facilitate the use. It can be understood that, the printed circuit board 161 can be set in the casing 11, and the drive circuit 162 can be made in the printed circuit board 161. The lead terminal of the winding 122 can be made into the insertion pin 126 to facilitate electrical connection with the printed circuit board 161.

The rotor 13 comprises: a shaft 131 and a rotor core 132. The shaft 131 passes through a center of the rotor core 132, such that the rotor core 132 can be supported by the shaft 131; and the rotor core 132 is placed in the stator 12. Therefore, when the winding 122 is energized, an alternating magnetic field is generated on the stator core 121 to drive the rotor core 132 to rotate and in turn drive the shaft 131 to rotate. In addition, the rotor core 132 may be a combined structure of the rotor core 13 and magnets, or may be formed by punching the silicon steel sheets into a cage-like shape by a punching machine, and stacking punched silicon steel sheets, casting with aluminum for processing.

Both the two bearings 14 are sleeved outside the shaft 131, and are located at the two ends of the rotor core 132, respectively. Since the weight of the rotor 13 is mostly concentrated at the position of the rotor core 132, the center of gravity of the rotor 13 is also at the position corresponding to the rotor core 132. Such arrangement of the two bearings 14 at the two ends of the rotor core 132 respectively can better support the shaft 131, and in turn support the rotor core 132, which makes the rotor core 132 and the shaft 131 more stably rotate. The arrangement of the two bearings 14 for supporting the shaft 131 enables the rotation of the shaft 131 more flexibly.

Two bearings 14 are arranged within the two bearing brackets 15, respectively, such that the two bearings 14 and in turn the rotor 33 are supported by corresponding bearing brackets 15. The two bearing brackets 15 are respectively installed at two ends of the casing 11 to support the rotor 13 in the casing 11 and enable the rotor 13 to rotate flexibly in the casing 11. Moreover, the stator core 121 is insulated from the respective bearing brackets 15. The use of the two bearing brackets 15 can support the bearings 14 more stably, ensure the smooth rotation between the outer ring and the inner ring of each bearing 14, and can reduce vibration, avoid the bearings 14 from creeping. The outer rings of the bearings 14 are in electrical connection to the bearing brackets 15, respectively.

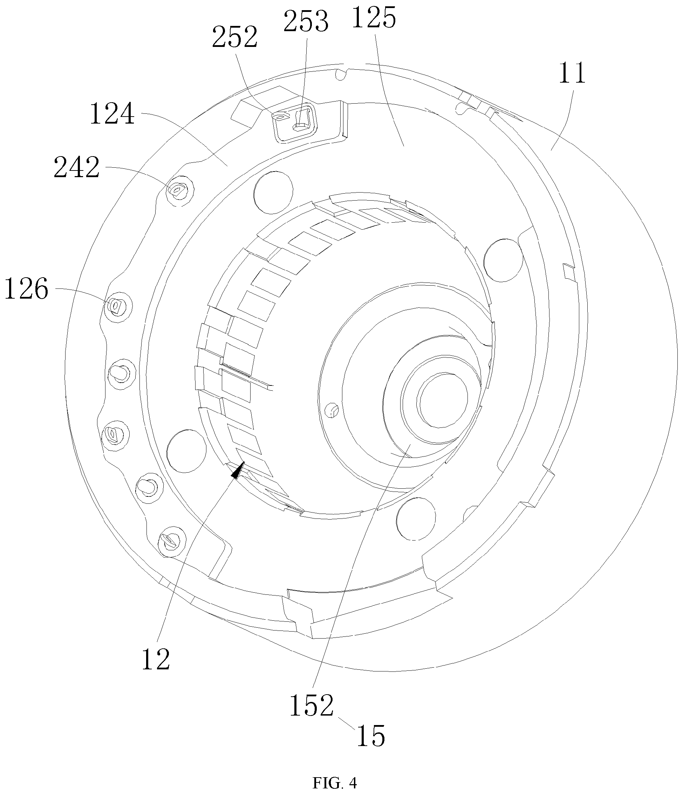

As shown in FIG. 1 and FIG. 4, in an embodiment, the stator 12 and the casing 11 are plastic encapsulated into an integrated structure, so that the stator 12 is firmly and stably fixed in the casing 11. The casing 11 can be manufactured to have a relatively small size, thereby reducing the volume and the weight of the manufactured brushless motor 100. For example, when the casing 11 is made by injection molding, the stator 12 can be placed in a mold, so that when the casing 11 is injection molded, the casing 11 and the stator 12 form an integrated structure. It can be understood that, in some other embodiments, the casing 11 can also be made separately, and the stator 12 can be fixed in the casing 11.

In an embodiment, a plastic package end face 125 may be formed on an end face of the stator core 121 to protect the stator core 121, so that external impurities are prevented from entering the stator core 121 and external conductive piece is prevented from connecting with the stator core 121. Specifically, the plastic package end face 125 can be arranged on the insulating skeleton 123, so that the plastic package end face 125 is directly formed on the end face of the stator core 121 after the insulating skeleton 123 is mounted on the stator core 121.

In the above embodiment, when the stator 12 and the casing 11 are plastic encapsulated into an integrated structure, the plastic package end face 125 can be formed on the end face of the stator 12 at the same time, which is convenient for the processing and manufacture, as well as the molding of the plastic package end face 125. It can be understood that, if a sealing board 124 is arranged on the stator 12, the sealing board 124, the stator 12, and the casing 11 can be plastic encapsulated into an integrated structure.

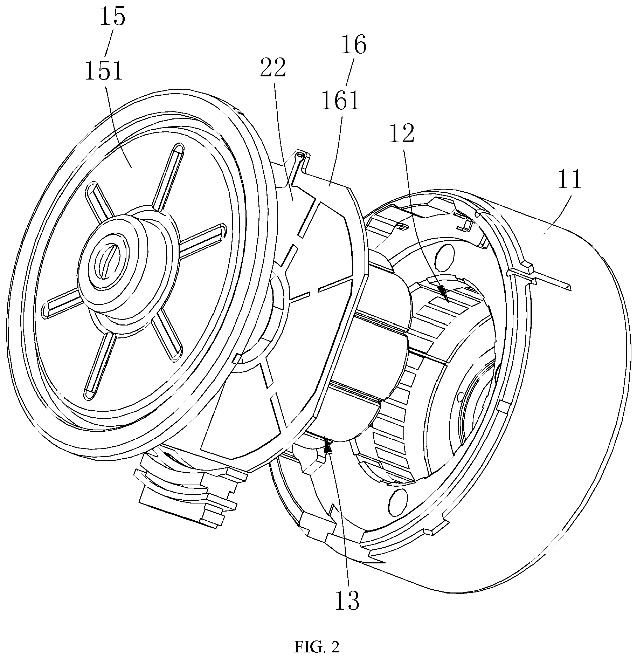

As shown in FIGS. 1-3, in an embodiment, the two bearing brackets 15 are composed of a first bracket 151 and the second bracket 152. The first bracket 151 and the second bracket 152 are located at the two ends of the casing 11, respectively. The first bracket 151 is used as an end cover of the casing 11, and the second bracket 152 and the casing 11 are plastic encapsulated into an integral structure, that is, when the casing 11 is injection molded, the second bracket 152 can be placed in the mold, such that the second bracket 152 and the casing 11 can be injection molded as a whole during the injection molding of the casing 11. In this way, the second bracket 152 is firmly fixed in the casing 11, which facilitates the processing and manufacture and reduces the weight and the cost.

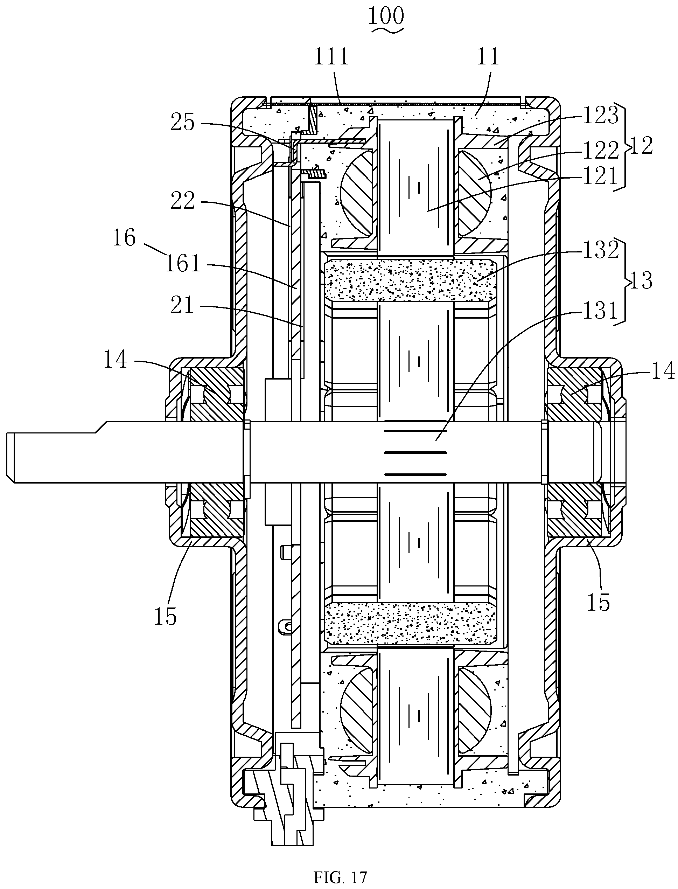

As shown in FIG. 17, in an embodiment, both the two ends of the casing 11 may be designed to be open structures, and both the two bearing brackets 15 may be used as two end covers. Such that a fan and other structures can be installed in one end of the casing 11 to better dissipate heat. It can be understood that such a structure has more practical significance for motors that require output at both ends of the shaft 131. In addition, the configuration of two ends of the casing 11 as the open structures and the two bearing brackets 15 as end covers may increase the strength of the whole brushless motor 100 via the bearing bracket 15. In addition, the bearing bracket 15 can also be used for heat dissipation, in order to improve heat dissipation efficiency. The use of the bearing bracket as the end cover of the casing 11 enables the whole end cover to be made of a metal, or only a part of the end cover that supports the bearing 14 to be made of the metal, thereby preventing the bearing 14 from creeping and ensuring stable rotation of the bearing 14.

Furthermore, in the above embodiment, the two bearing brackets 15 are in electrical connection, so that the potentials of the two bearing brackets 15 are kept consistent, and the potentials of the outer rings of the two the bearing 14 are kept consistent. In the above embodiment, the first bracket 151 and the second bracket 152 are electrically connected, so that the first bracket 151 and the second bracket 152 have the same potential. Specifically, the conductive piece 111 may be arranged within the casing 11 to electrically connect the two bearing brackets 15. It can be understood that the conductive piece 111 can also be attached from the outside of the casing 11 to electrically connect the two bearing brackets 15.

Furthermore, in the above embodiment, a first conductive sheet 21 and a second conductive sheet 22 are arranged between the first bracket 151 and the stator core 121. The first conductive sheet 21 and the second conductive sheet 22 are aligned side by side and spaced apart from each other. The first conductive sheet 21 is in electrical connection with the stator core 121, and the second conductive sheet 22 is in electrical connection with the first bracket 151. In this way, the conductivity on the first bracket 151 and the second bracket 152 can be introduced to the second conductive sheet 22, and the conductivity on the stator core 121 can be introduced to the first conductive sheet 21, such that a capacitor is formed between the first conductive sheet 21 and the second conductive sheet 22, and capacitance between the stator core 121 and each bearing bracket 15 can be adjusted. An equivalent capacitance between the stator core 121 and the inner ring of each bearing 14 is approximate to or equal to an equivalent capacitance between the stator core 121 and the outer ring of each bearing 14, that is, the equivalent capacitance between the stator core 121 and the inner ring of each bearing 14 and the equivalent capacitance between the stator core 121 and the outer ring of each bearing 14 are balanced, in turn, the potential between the outer ring of each bearing 14 and the inner ring of each bearing 14 are balanced, such that the potential of the outer ring of each bearing 14 and the potential of the inner ring of each bearing 14 are similar, a potential difference between the outer ring of each bearing 14 and the inner ring of each bearing 14 are reduced, thereby decreasing a shaft voltage and avoid the bearing 14 from electric erosion. It can be understood that in the above embodiment, the first conductive sheet 21 and the second conductive sheet 22 can also are arranged between the second bracket 152 and the stator core 121.

In the above embodiment, as the casing 11, the second bracket 152, and the stator core 121 are plastic-encapsulated into an integrated structure, during arrangement of the first conductive sheet 21 and the second conductive sheet between the second bracket 152 and the stator core 121, the first conductive sheet 21 and the second conductive sheet 22 are required to be placed in the mold in advance when manufacturing the casing 11, such that the first conductive sheet 21, the second conductive sheet 22, and the casing 11 are plastic-encapsulated into an integrated structure.

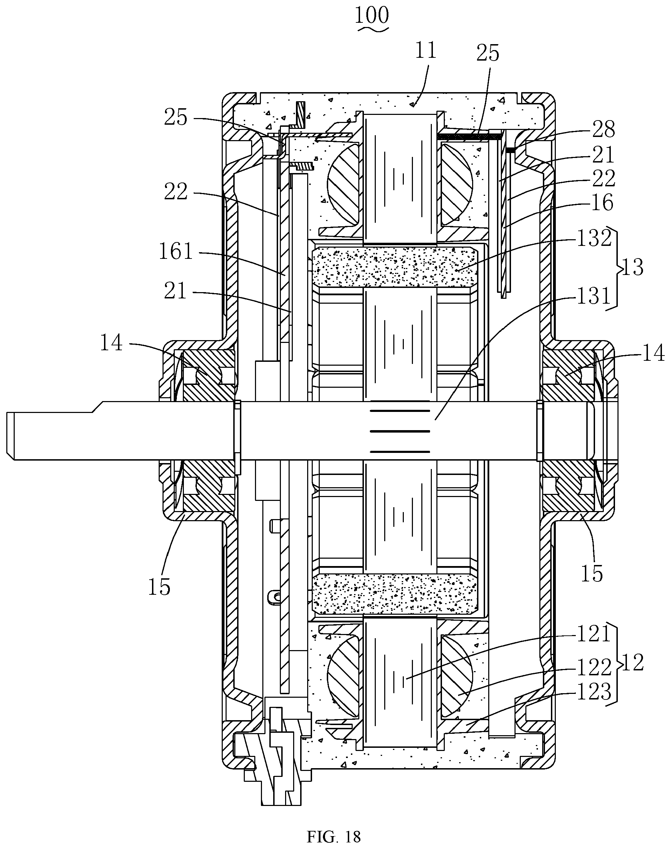

As shown in FIG. 18, in an embodiment, when both the two ends of the casing 11 may be designed to be open structures, the first conductive sheet 21 and the second conductive sheet 22 can be arranged between each of the two ends of the stator core 121 and each of the two bearing brackets 15. In such case, the two bearing brackets 15 may not be electrically connected, both the two first conductive sheets 21 at two ends of the stator core 121 are in electrical connection with the stator core 121, while the two second conductive sheets 22 are electrically connected to the corresponding adjacent bearing brackets 15, respectively, thus, the first conductive sheets 21 and the second conductive sheets 22 at the two ends of the stator core 121 are adopted to adjust the capacitive reactance between the stator core and the two bearing brackets 15, respectively, thereby potential difference between the inner and outer rings of the two the bearing 14 are adjusted separately. It can be understood that, in some embodiments, the two bearing brackets 15 may also be electrically connected, in such condition, the arrangement of the first conductive sheet 21 and the second conductive sheet 22 between each of the two ends of the stator core 121 and each of the two bearing brackets 15 has greater adjustment space and adjustment margin.

As shown in FIG. 17, in an embodiment, when both the two ends of the casing 11 are designed to be open structures, the two bearing brackets 15 can also be electrically connected, so that the potentials of the two bearing brackets 15 are equivalent, the first conductive sheet 21 and the second conductive sheet 22 can be arranged between one of the bearing brackets 15 and the stator core 121, and the capacitive reactance between each bearing bracket 15 and the second conductive sheet 22 can be adjusted by the first conductive sheet 21 and the second conductive sheet 22, which is convenient for the manufacture, reduces the production cost, and is easy to use.

It can be understood that, in some other embodiments, in case that the structures of the two bearing brackets 15 are different, the potential differences between the inner rings and the outer rings of the two bearings 14 are also different, the two bearing brackets 15 cannot be electrically connected, thus, the capacitive reactance between only one of the bearing brackets 15 and the stator core 121 is adjusted; or the capacitive reactance between the respective bearing brackets 15 and the stator core 121 are adjusted separately.

In the following embodiments, unless otherwise indicated by two bearing brackets 15 or open structures of the two ends of the casing, then the bearing bracket 15 refers to the first bracket 151.

As shown in FIGS. 1-2, in an embodiment, the brushless motor 100 further comprises a supporting board 16. The supporting board 16 is fixed at the casing 11, and the first conductive sheet 21 and the second conductive sheet 22 are mounted at the supporting board 16, so that the first conductive sheet 21 and the second conductive sheet 22 are supported by the supporting board 16, which enables the first conductive sheet 21 and the second conductive sheet 22 to be installed within the casing 11.

As shown in FIGS. 1-3, in an embodiment, the supporting board 16 can be a printed circuit board 161, and the first conductive sheet 21 and the second conductive sheet 22 are mounted on two sides of the printed circuit board 161, so that the first conductive sheet 21 and the second conductive sheet 22 are supported by the printed circuit board 161, which facilitates the installation and fixation of the first conductive sheet 21 and the second conductive sheet 22, and reduces the occupied space. The brushless motor 100 is made to be smaller, thus improving the integration.

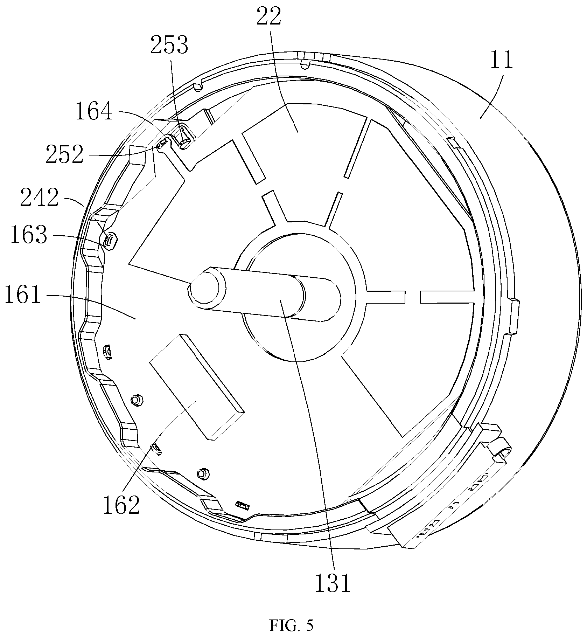

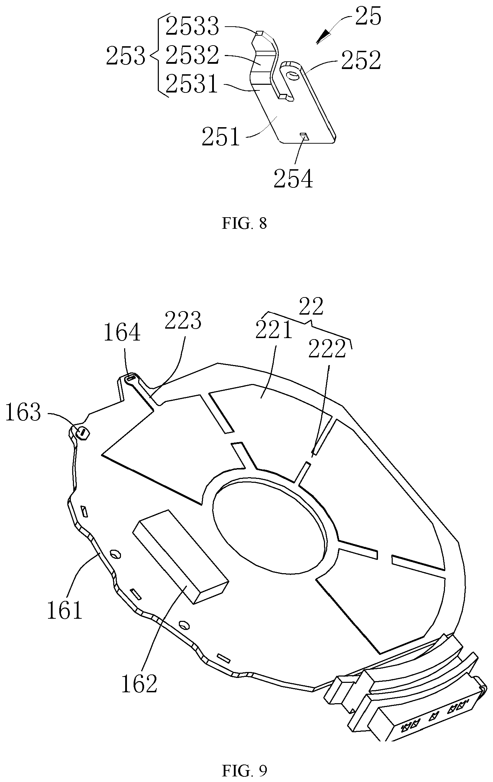

Referring to FIG. 5 and FIG. 9, in the above embodiment, the drive circuit 162 can be arranged on the printed circuit board 161 to facilitate driving the winding 122. The first conductive sheet 21 and the second conductive sheet 22 are both insulated and disconnected from the drive circuit 162, so as to prevent the first conductive sheet 21 and the second conductive sheet 22 from affecting the drive circuit 162.

Furthermore, in the above embodiment, the printed circuit board 161 can be made relatively large, the drive circuit 162 can be arranged on a region of the printed circuit board 161, and the first conductive sheet 21 and the second conductive sheet 22 can be arranged on another region of the printed circuit board 161, so as to reduce the influence of the first conductive sheet 21 and the second conductive sheet 22 on the drive circuit 162.

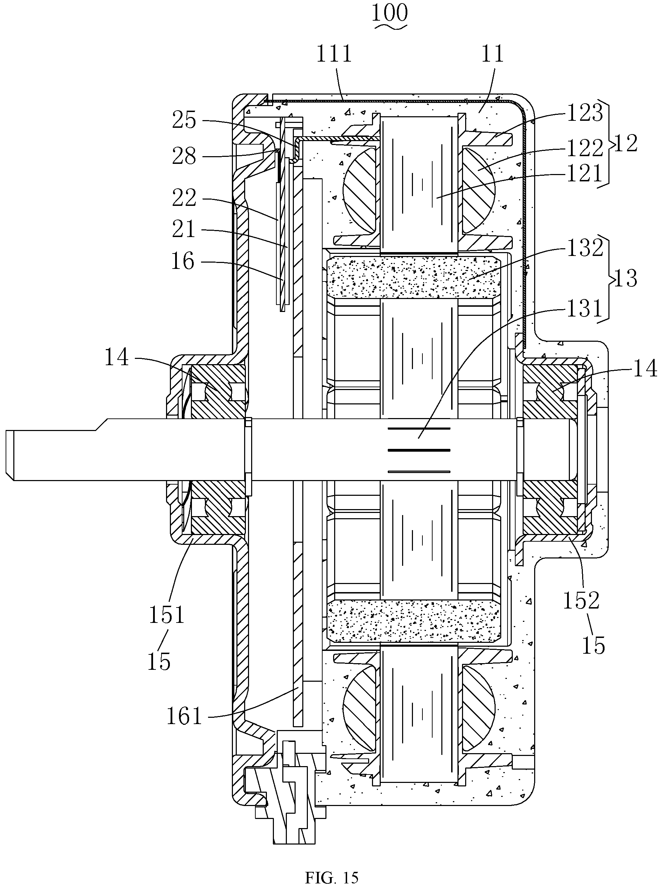

Please refer to FIG. 15. In an embodiment, the supporting board 16 may not be the printed circuit board 161, that is, the supporting board 16 may be separately provided to support the first conductive sheet 21 and the second conductive sheet 22, which can reduce The influence of the first conductive sheet 21 and the second conductive sheet 22 on the drive circuit 162 on the printed circuit board 161 is small.

In an embodiment, since the printed circuit board 161 is generally made relatively small, the supporting board 16 and the printed circuit board 161 can be arranged on the same plane to reduce the occupied space thereof within the casing 11. It can be understood that, in some other embodiments, the supporting board 16 and the printed circuit board 161 may be aligned side by side and spaced apart from each other.

Referring to FIG. 18, in an embodiment, when the first conductive sheet 21 and the second conductive sheet 22 are arranged on each of the two ends of the stator core 121,

the printed circuit board 161 and the supporting board 16 may be respectively arranged at the two ends of the stator core 121, that is, the first conductive sheet 21 and the second conductive sheet 22 at one end of the stator core 121 are installed on the printed circuit board 161, while the first conductive sheet 21 and the second conductive sheet 22 at the other end of the stator core 121 are installed on the printed circuit board 161. In some other embodiments, the supporting board 16 may be provided at each end of the stator core 121, and the two the first conductive sheet 21 and the second conductive sheet 22 may be installed on the corresponding supporting board 16.

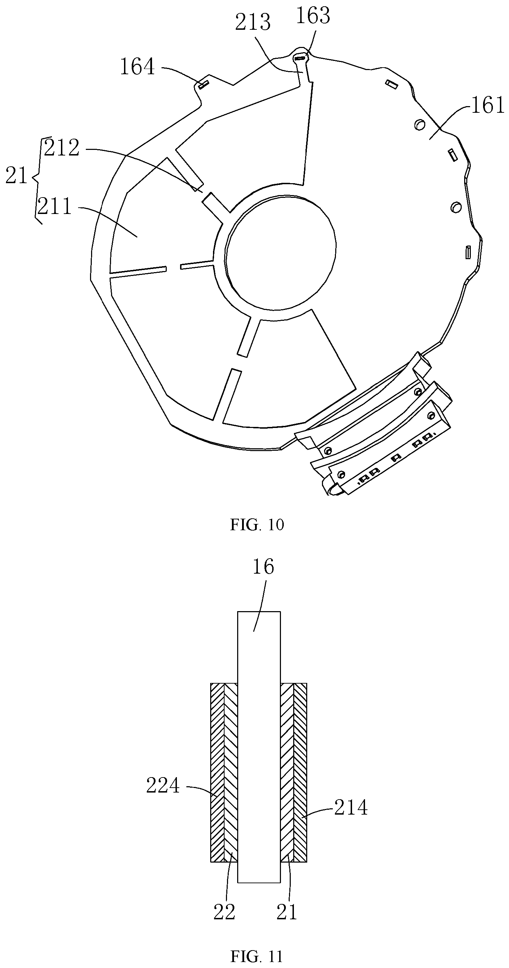

Referring to FIG. 11, in an embodiment, a first insulating protective layer 214 is arranged on one side of the first conductive sheet 21 away from the second conductive sheet 22, so that the first insulating protective layer 214 can protect the first conductive sheet 21 by reducing the impact of other components in the brushless motor 100 on the first conductive sheet 21. Similarly, a second insulating protective layer 224 is arranged on one side of the second conductive sheet 22 away from the first conductive sheet 21. The second insulating protective layer 224 can protect the second conductive sheet 22 by reducing the impact of other components in the brushless motor 100 on the second conductive sheet 22. Especially when the first conductive sheet 21 and the second conductive sheet 22 are installed on the two sides of the supporting board 16, the supporting board 16 can prevent impurities from entering the gap between the first conductive sheet 21 and the second conductive sheet 22. The insulating protective layer 214 can cooperate with the supporting board 16 to protect the first conductive sheet 21, and the second insulating protective layer 224 can cooperate with the supporting board 16 to protect the second conductive sheet 22.

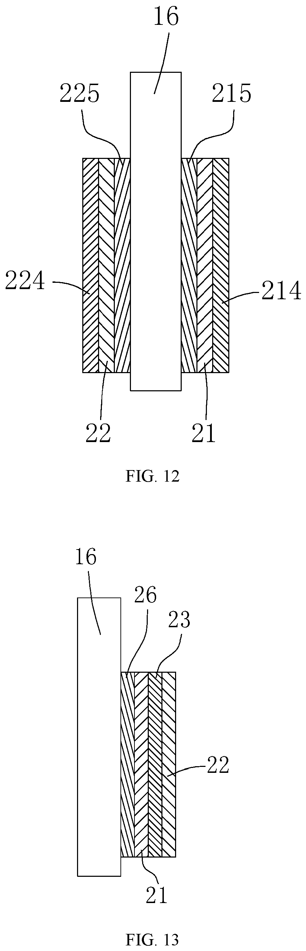

Referring to FIG. 12, in an embodiment, a first insulating layer 215 is arranged one side of the first conductive sheet 21 close to the second conductive sheet 22, so that when the first conductive sheet 21 and the second conductive sheet 22 are aligned side by side and spaced apart from each other, a better non-electrical connection between the first conductive sheet 21 and the second conductive sheet 22 is ensured. Similarly, the second insulating layer 225 is arranged on one side of the second conductive sheet 22 close to the first conductive sheet 21, to ensure a better non-electrical connection between the first conductive sheet 21 and the second conductive sheet 22. Especially when the first conductive sheet 21 and the second conductive sheet 22 are installed on the two sides of the printed circuit board 161, the first conductive sheet 21 and the second conductive sheet 22 can be better disconnected from the drive circuit 162 of the printed circuit board 161.

Furthermore, in the above-mentioned embodiment, the first insulating layer 215 and the first insulating protective layer 214 may be arranged on the two sides of the first conductive sheet 21, respectively, to better protect the first conductive sheet 21, and when the first conductive sheet 21 is installed, the first conductive sheet 21 can be better prevented from affecting or being affected by other parts in the brushless motor 100. Similarly, the second insulating layer 225 and the second insulating protective layer 224 may be arranged on the two sides of the second conductive sheet 22, respectively, to better protect the second conductive sheet 22, and when the second conductive sheet 22 is installed, the second conductive sheet 21 can be better prevented from affecting or being affected by other parts in the brushless motor 100.

Referring to FIG. 13, in an embodiment, a dielectric layer 23 is arranged between the first conductive sheet 21 and the second conductive sheet 22, and the first conductive sheet 21 and the second conductive sheet 22 are respectively arranged on two sides of the dielectric layer 23, such that the first conductive sheet 21 and the second conductive sheet 22 can be supported by the dielectric layer 23, and the first conductive sheet 21, the dielectric layer 23, and the second conductive sheet 22 are made into a whole, which is convenient for installation. The dielectric layer 23 may be an insulating layer to ensure that the first conductive sheet 21 and the second conductive sheet 22 are in non-electrical connection. For example, in this embodiment, the first conductive sheet 21 is installed on the supporting board 16 via an adhesive layer, so that the second conductive sheet 22 is also supported on the supporting board 16, and the first conductive sheet 21 and the second conductive sheet 22 are arranged at the same side of the supporting board 16. It can be understood that, in some other embodiments, the second conductive sheet 22 can also be installed on the supporting board 16 via the adhesive layer, so that the first conductive sheet 21 is also supported on the supporting board 16, and the first conductive sheet 21 and the second conductive sheet 22 are arranged at the same side of the supporting board 16. The adhesive layer can be a conductive layer or an insulating layer. When the supporting board 16 is the printed circuit board 161, the adhesive layer preferably adopts an insulating layer.

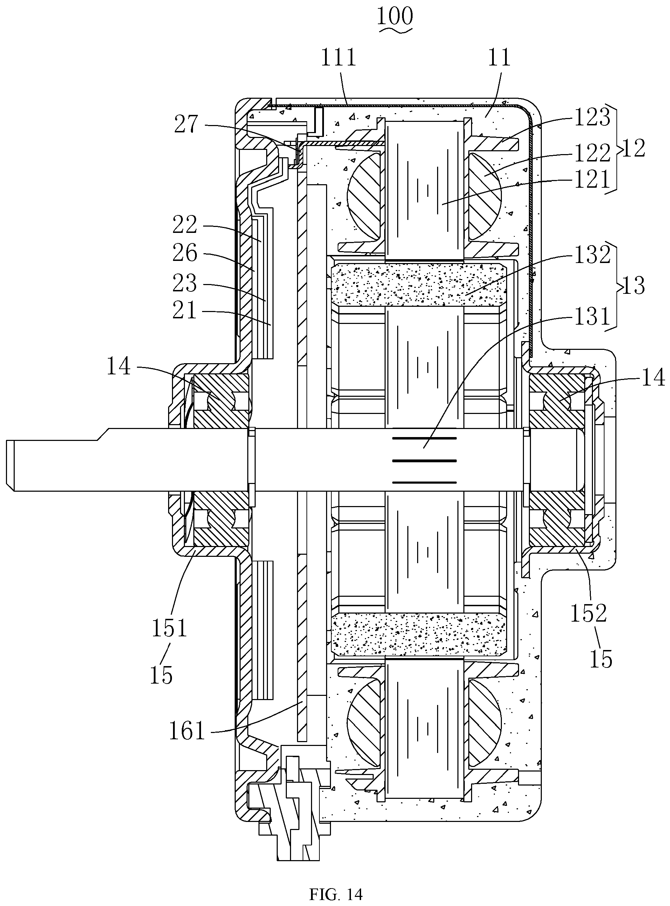

Referring to FIG. 14, in an embodiment, the dielectric layer 23 is arranged between the first conductive sheet 21 and the second conductive sheet 22, and the first conductive sheet 21 and the second conductive sheet 22 are supported by the dielectric layer 23, then the second conductive sheet 22 can be installed on the adjacent bearing bracket 15 via the adhesive layer 26, so that the first conductive sheet 21 is also supported on the adjacent bearing bracket 15, so as to reduce the occupied space in the casing 11. Since the second conductive sheet 22 needs to be electrically connected to the adjacent bearing bracket 15, the adhesive layer 26 can use a conductive layer. It can be understood that, the adhesive layer 26 can also use an insulating layer, in such case, the second conductive sheet 22 needs to be led out and electrically connected to the bearing bracket 15. It can be understood that, in some other embodiments, the first conductive sheet 21 can be installed on the adjacent bearing bracket 15 via the adhesive layer 26, so that the second conductive sheet 22 is also supported on the bearing bracket 15 to reduce the occupied space in the casing 11. In such case, the adhesive layer 26 needs to use an insulating layer, to avoid electrical connection between the corresponding bearing bracket 15 and the first conductive sheet 21.

Referring to FIG. 14, in the above embodiment, when the second conductive sheet 22 is electrically connected to the bearing bracket 15, the first conductive sheet 21 can extend to form a connecting pad, and the adhesive layer 26 is arranged between the connecting pad and the bearing bracket 15. A metal connecting needle 27 is arranged within the casing 11, and the metal connecting needle 27 is connected to the stator core 121, such that when the bearing bracket 15 is installed, the metal connecting needle 27 is brought into abutment with the connecting pad, so as to electrical connection between the first conductive sheet 21 and the stator core 121, which is convenient in connection. It can be understood that, in some embodiments, the first conductive sheet 21 and the stator core 121 may be electrically connected via a wire.

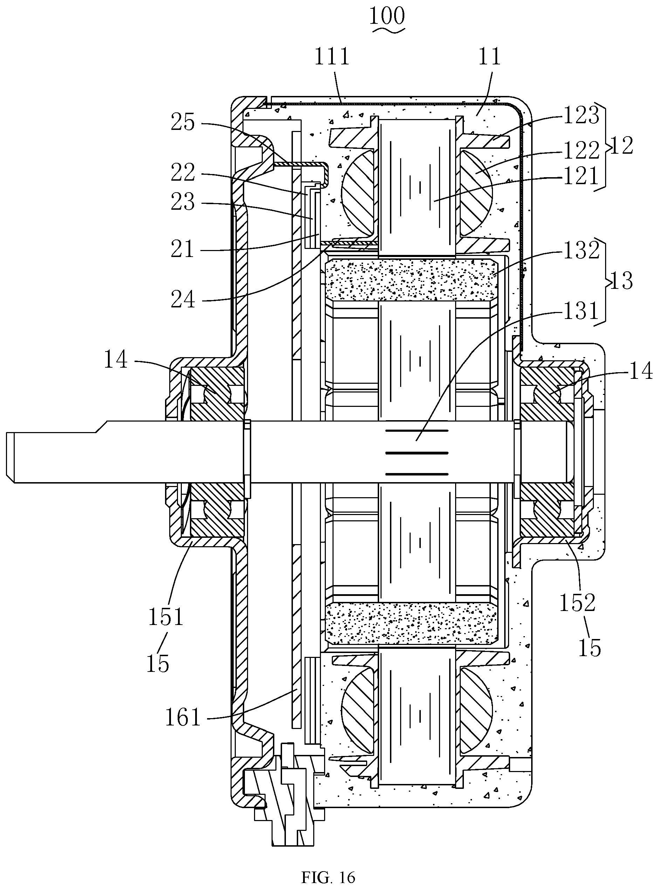

Referring to FIG. 16, in an embodiment, a dielectric layer 23 is arranged between the first conductive sheet 21 and the second conductive sheet 22, and the first conductive sheet 21 and the second conductive sheet 22 are supported by the dielectric layer 23, then the second conductive sheet 22 can be installed on an adjacent plastic package end face 125 via the adhesive layer 26, so that the first conductive sheet 21 is also supported on the adjacent plastic package end face 125, so as to reduce the occupied space in the casing 11. The adhesive layer 26 may use a conductive layer or an insulating layer. It can be understood that, in some other embodiments, the first conductive sheet 21 can be installed on the adjacent plastic package end face 125 via the adhesive layer 26, so that the second conductive sheet 22 is also supported on the plastic package end face 125, so as to reduce the occupied space in the casing 11.

Referring to FIG. 16, in the above embodiment, a first electrical contact 24 can be installed at the insulating skeleton 123, with one end of the first electrical contact 24 extending to the plastic package end face 125, and the other end of the first electrical contact 24 being in connection with the stator core 121. Moreover, a second electrical contact 25 can also be installed at the insulating skeleton 123, with one end of the second electrical contact 25 being led to the plastic package end face 125, and the other end of the second electrical contact 25 extending out of the plastic package end face 125 to be in abut with the bearing bracket 15. When the first conductive sheet 21 is installed on the plastic package end face 125, the first conductive sheet 21 can be connected to one end of the first electrical contact 24, so as to electrically connect the first conductive sheet 21 and the stator core 121. The second conductive sheet 22 leads to a connecting wire to be electrically connected to one end of the second electrical contact 25. During the installation of the bearing bracket 15, the other end of the second electrical contact 25 abuts the bearing bracket 15, so as to electrically connect the second conductive sheet 22 with the bearing bracket 15.

Referring to FIGS. 1 and 5, in an embodiment, the second conductive sheet 22 is arranged on one side of the supporting board 16 away from the stator core 121, and the first conductive sheet 21 is arranged on one side of the supporting board 16 near the stator core 12, which facilitates the electrical connection between the first conductive sheet 21 and the stator core 121, as well as the electrical connection between the second conductive sheet 22 and the corresponding bearing bracket 15. It can be understood that, in other embodiments, the first conductive sheet 21 can be arranged on one side of the supporting board 16 away from the stator core 121, and the second conductive sheet 22 can be arranged on one side of the supporting board 16 close to the stator core 121, in such case, wiring pads can be arranged on the two sides of the supporting board 16, such that the first conductive sheet 21 can be electrically connected with the wiring plates arranged on the supporting board 16 on the side close to the stator core 121, and the second conductive sheet 22 can be electrically connected to the stator core 121. The supporting board 16 is electrically connected to the wiring pad on the side away from the stator core 121.

As shown in FIGS. 4 and 6, according to the invention, when the first conductive sheet 21 and the second conductive sheet 22 are installed on the supporting board 16, the supporting board 16 is provided with a first conductive pad 163 and a second conductive pad 164, the first conductive pad 163 is electrically connected to the first conductive sheet 21, and the second conductive pad 164 is electrically connected to the second conductive sheet 22. A first electrical contact 24 and a second electrical contact 25 are installed at the casing 11, the first electrical contact 24 is electrically connected to the stator core 121, and the second electrical contact 25 is electrically connected to the adjacent bearing bracket 15. The first electrical contact 24 is used to connect the first conductive pad 163, and the second electrical contact 25 is used to connect the second conductive pad 164, thereby facilitating the electrical connection between the first conductive sheet 21 and the stator core 121, as well as the electrical connection between the second conductive sheet 22 and the bearing bracket 15. The supporting board 16 may be a printed circuit board 161 or a board provided separately.

Specifically, referring to FIGS. 6 and 7, in the above embodiment, the first electrical contact 24 comprises: a first conductor part 242, a first electrically conductive part 243, and the first insertion part 241. The first conductor part 242 and the first electrically conductive part 243 are formed on the first insertion part 241, the first conductor part 242 and the first electrically conductive part 243 are supported by the first insertion part 241, and the first insertion part 241 is fixed at the casing 11, so as to support the first conductor part 242 and the first electrically conductive part 243 at the casing 11. The first conductor part 242 is used to connect with the first conductive pad 163, and the first electrically conductive part 243 is in abut connection with the stator core 121, as shown in FIGS. 4-5, so that when the supporting board 16 is installed, the first conductor part 242 is connected to the first conductive pad 163, and then to the first conductive sheet 21, thus realizing the electrical connection between the first conductive sheet 21 and the stator core 121.

Furthermore, in the above embodiment, the first conductor part 242 protrudes from one end of a lateral side of the first insertion part 241. The first electrically conductive part 243 comprises: a first section 2431, where the first section 2431 is formed by extending the other end of the lateral side of the first insertion part 241 towards a direction of one face of the first insertion part 241; and a second section 2432, where the second section 2432 is formed by extending a free end of the first section 2431 towards a direction away from the first conductor part 242. That is, the first electrically conductive part 243 comprises: a first section 2431 and a second section 2432. The first section 2431 is formed by extending a lateral side of the first insertion part 241 towards the direction of one face of the first insertion part 241. The second section 2432 is formed by extending the free end of the first section 2431 towards the direction away from the first conductor part 242. The first conductor part 241 and the first electrically conductive part 243 are formed by extending the same side of the first insertion part 241. In this way, it is convenient for processing and installation, as well as the electrical connection with the stator core 121.

Furthermore, in the above embodiment, the first electrical contact 24 is formed by punching a metal sheet. It can be understood that, the first electrical contact 24 can also be formed by bending a metal sheet. In some other embodiments, the first electrical contact 24 may be formed by welding multiple metal sheets.

Furthermore, in the above embodiment, the first electrical contact 24 can be installed on the sealing board 124 to better support the first electrical contact 24. Furthermore, the first insertion part 241 can be fixed on the insulating skeleton 123, and the first conductor part 242 can be fixed on the sealing board 124, so as to better fix the first electrical contact 24. Furthermore, a first protrusion 244 protrudes from the first insertion part 241, so that the first insertion part 241 is more firmly fixed on the insulating skeleton 123.

Furthermore, referring to FIG. 10, in the above embodiment, the first conductive sheet 21 can be connected to the first conductive pad 163 via a first lead wire 213. Referring to FIG. 9, in the above embodiment, the second conductive sheet 22 can be connected to the second conductive pad 164 via a second lead wire 223.

Specifically, referring to FIG. 6 and FIG. 8, in the above embodiment, the second electrical contact 25 includes: a second conductor part 252, a second electrically conductive part 253, and a second insertion part 251. The second conductor part 253 and the second electrically conductive part 253 are installed on the second insertion part 251. The second conductor part 252 and the second electrically conductive part 253 are supported by the second insertion part 251; and the second insertion part 251 is fixed at the casing 11, such that the second conductor part 252 and the second electrically conductive part 253 are supported at the casing 11. The second conductor part 252 is used to connect with the second conductive pad 164, and the second electrically conductive part 253 is used to abut with the bearing bracket 15. Referring to FIG. 4 and FIG. 5, when the supporting board 16 is installed, the second conductor part 252 is connected to the second conductive pad 164, and in turn connected to the second conductive sheet 22. When the bearing bracket 15 is installed, the second electrically conductive part 253 abuts with the bearing bracket 15, so as to electrically connect the second conductive sheet 22 with the bearing bracket 15.

Furthermore, in the above embodiment, the second conductor part 252 protrudes from one end of a lateral side of the second insertion part 251. The second electrically conductive part 253 includes: a first portion 2531, extended from the other end of the lateral side of the second insertion part 251; a second portion 2532 formed by extending a free end of the first portion 2531 towards a face of the second insertion part 251; and a third portion 2533 formed by extending a free end of the second portion 2532 in a direction away from the second insertion part 251. That is, the second electrically conductive part 253 includes: the first portion 2531, the second portion 2532, and the third portion 2533. The first portion 2531 is extended from the lateral side of the second insertion part 251. The second portion 2532 is extended from the free end of the first portion 2531 towards a face of the second insertion part 251. The third portion 2533 is extended from the free end of the second portion 2532 in the direction away from the second insertion part 251. The third portion 2533 is in parallel to the second conductor part 252, and both the second conductor part 252 and the second electrically conductive part 253 are arranged at the same lateral side of the second insertion part 251, which is convenient for process and installation, as well as the electrical connection with the bearing bracket 15.

Furthermore, in the above embodiment, the second electrical contact 25 is formed by punching a metal sheet. It can be understood that, the second electrical contact 25 can also be formed by bending a metal sheet. In some other embodiments, the second electrical contact 25 may be formed by welding multiple metal sheets.

Furthermore, in the above embodiment, the second electrical contact 25 can be installed on the sealing board 124 to better support the second electrical contact 25. Furthermore, the second insertion part 251 can be fixed on the insulating skeleton 123, and the second conductor part 252 and the second electrically conductive part 253 can be fixed on the sealing board 124, so as to better fix the second electrical contact. 25. Furthermore, a second protrusion 254 protrudes from the second insertion part 251, so that the second insertion part 251 is more firmly fixed on the insulating skeleton 123.

Furthermore, in the above embodiment, the sealing board 124 is provided, and the first electrical contact 24 and the second electrical contact 25 are supported by the sealing board 124. When the stator 12 and the casing 11 are injection molded into an integral structure, the sealing board 124 and the casing 11 can also be injection molded as a whole, which is convenient for supporting and fixing the first electrical contact 24 and the second electrical contact 25, and is convenient for processing and manufacturing.

Furthermore, referring to FIG. 15, in an embodiment, an elastic conductive pin 28 can also be arranged on the supporting board 16. The second conductive sheet 22 is electrically connected to the elastic conductive pin 28, and the elastic conductive pin 28 presses against the bearing bracket 15 to electrically connect the second conductive sheet 22 with the bearing bracket 15.

Referring to FIG. 10, in an embodiment, the first conductive sheet 21 includes a plurality of first electrical regions 211, and every two adjacent first electrical regions 211 are connected by first connecting regions 212 which are tearable. The tearable first connecting regions 212 are used to connect every two adjacent first electrical regions 211 to form the first conductive sheet 21. Thus, in use, the area of the first conductive sheet 21 can be adjusted according to the needs, thereby facilitating the adjustment of the capacitive reactance between bearing bracket 15 and the stator core 121. Similarly, referring to FIG. 9. In an embodiment, the second conductive sheet 22 includes a plurality of second electrical regions 221, and every two adjacent second electrical regions 221 are connected by the second connecting regions 222, which are tearable. The tearable second connecting regions 222 are used to connect every two adjacent second electrical regions 221 to form the second conductive sheet 22. Thus, in use, the area of the second conductive sheet 22 can be adjusted according to the needs, thereby facilitating the adjustment of the capacitive reactance between bearing bracket 15 and the stator core 121.

In an embodiment, the first conductive sheet 21 may be a conductive foil. One side of the conductive foil is an adhesive surface having a conductivity property, and the other side of the conductive foil is an insulating surface having an insulating property, which are convenient for use. In use, the first conductive sheet 21 can be directly attached to the supporting board 16, or attached to the plastic package end face 125. Meanwhile, it is also convenient to cut the first conductive sheet 21 to adjust the area of the first conductive sheet 21. In the same way, the second conductive sheet 22 can be a conductive sheet. One side of the conductive foil is an adhesive surface having a conductivity property, and the other side of the conductive foil is an insulating surface having an insulating property, which are convenient for use. In use, the second conductive sheet 22 can be directly attached to the supporting board 16, or attached to the plastic package end face 125. Meanwhile, it is also convenient to cut the second conductive sheet 22 to adjust the area of the second conductive sheet 22.

In an embodiment, the first conductive sheet 21 may be a copper layer fabricated in the printed circuit board 161. Similarly, the second conductive sheet 22 may also be a copper layer fabricated in the printed circuit board 161.

The brushless motor 100 according to embodiments of the present application can effectively balance the electric potential between the inner ring and the outer ring of each bearing 14, reduce the voltage between the inner ring and the outer ring of each bearing 14, and avoid electric erosion between the inner ring and the outer ring of each bearing 14, thereby ensuring excellent and smooth operation of the brushless motor 100, reducing the noise and the vibration, and prolonging the service life. The brushless motor 100 according to embodiments of the present application can be applied to electrical appliances such as air conditioners, washing machines, microwave ovens, refrigerators, and the like.

Furthermore, an embodiment of the present application further provides an electrical equipment, which includes the brushless motor 100 as described in any of the above embodiments. The use of the brushless motor 100 in the electrical equipment can ensure a good service life of the brushless motor 100.

The aforementioned embodiments are only preferred embodiments of the present application, and are not intended to limit the present application.

## Claims

1. A brushless motor (100), comprising:
a casing (11) having an insulating property;
a stator (12) fixed within the casing (11), the stator (12) comprising a stator core (121) and a winding (122) wound around the stator core (121); and
a rotor (13) rotatably arranged within the stator (12), the rotor (13) comprising a rotor core (132) and a shaft (131) passing through the rotor core (132), wherein two bearings (14) are sleeved on the shaft (131) at positions corresponding to two ends of the rotor core (132), respectively, and two bearing brackets (15) are installed at two ends of the casing (11) for fixing the two bearings (14);
wherein
a first conductive sheet (21) and a second conductive sheet (22) are arranged between at least one of the two bearing brackets (15) and the stator core (121), and are configured to cooperate to balance a potential of an inner ring and a potential of an outer ring of each of the two bearings (14);
the first conductive sheet (21) and the second conductive sheet (22) are aligned side by side and spaced apart from each other; and
the first conductive sheet (21) is in electrical connection with the stator core (121), and the second conductive sheet (22) is in electrical connection with an adjacent bearing bracket (15);
**characterized in that:**
a supporting board (16) is configured to support the first conductive sheet (21) and the second conductive sheet (22);
the supporting board (16) is fixed at the casing (11);
wherein
the supporting board (16) is provided with a first conductive pad (163) and a second conductive pad (164), the first conductive pad (163) is electrically connected to the first conductive sheet (21), and the second conductive pad (164) is electrically connected to the second conductive sheet (22);
a first electrical contact (24) and a second electrical contact (25) are installed at the casing (11), the first electrical contact (24) is configured to connect with the first conductive pad (163), and the second electrical contact (25) is configured to connect with the second conductive pad (164); and
the first electrical contact (24) is in electrical connection with the stator core (121); and
the second electrical contact (25) is in electrical connection with the adjacent bearing bracket (15).

2. The brushless motor (100) of claim 1, wherein
the supporting board (16) is a printed circuit board (161);
a drive circuit (162) is arranged on the printed circuit board (161); and
the first conductive sheet (21) and the second conductive sheet (22) are both insulated and disconnected from the drive circuit (162).

3. The brushless motor (100) of claim 1, wherein the first conductive sheet (21) and the second conductive sheet (22) are attached to two sides of the supporting board (16), respectively.

4. The brushless motor (100) of claim 1, wherein
a first insulating layer (215) is arranged on a side of the first conductive sheet (21) facing the second conductive sheet (22);
and/or
a second insulating layer (225) is arranged on a side of the second conductive sheet (22) facing the first conductive sheet (21).

5. The brushless motor (100) of claim 1, wherein
a first insulating protective layer (214) is arranged on a side of the first conductive sheet (21) facing away from the second conductive sheet (22);
and/or
a second insulating protective layer (224) is arranged on a side of the second conductive sheet (22) facing away from the first conductive sheet (21).

6. The brushless motor (100) of claim 1, wherein the first electrical contact (24) comprises:
a first conductor part (242), configured to connect with the first conductive pad (163);
a first electrically conductive part (243), in abut connection with the stator core (121); and
a first insertion part (241), in connection with the first electrically conductive part (243) and the first conductor part (242);
wherein the first insertion part (241) is fixed at the casing (11).

7. The brushless motor (100) of claim 1, wherein the second electrical contact (25) comprises:
a second conductor part (252), configured to connect with the second conductive pad (164);
a second electrically conductive part (253), in abut connection with a corresponding bearing bracket (15); and
a second insertion part (251), in connection with the second electrically conductive part (253) and the second conductor part (252);
wherein the second insertion part (251) is fixed at the casing (11).

8. The brushless motor (100) of claim 1, wherein
a dielectric layer (23) is arranged between the first conductive sheet (21) and the second conductive sheet (22), and the first conductive sheet (21) and the second conductive sheet (22) are respectively arranged on two sides of the dielectric layer (23); and
the first conductive sheet (21), the second conductive sheet (22), and the dielectric layer (23) are arranged at a same side of the supporting board (16).

9. The brushless motor (100) of claim 1, wherein
a dielectric layer (23) is arranged between the first conductive sheet (21) and the second conductive sheet (22), and the first conductive sheet (21) and the second conductive sheet (22) are respectively arranged on two sides of the dielectric layer (23); and
the first conductive sheet (21) or the second conductive sheet (22) is attached to the adjacent bearing bracket (15) via an insulating connection layer.

10. The brushless motor (100) of claim 1, wherein the stator (12) and the casing (11) are plastic encapsulated into an integrated structure.

11. The brushless motor (100) of claim 1, wherein
a plastic package end face (125) is formed on an end face of the stator core (121);
a dielectric layer (23) is arranged between the first conductive sheet (21) and the second conductive sheet (22), and the first conductive sheet (21) and the second conductive sheet (22) are respectively arranged on two sides of the dielectric layer (23); and
the first conductive sheet (21) or the second conductive sheet (22) is attached to an adjacent plastic package end face (125).

12. The brushless motor (100) of any one of claims 1-11, wherein the two bearing brackets (15) are electrically connected.

13. The brushless motor (100) of any one of claims 1-11, wherein
the first conductive sheet (21) comprises a plurality of first electrical regions (211), and every two adjacent first electrical regions (211) are connected by tearable first connecting regions (212); and
the second conductive sheet (22) comprises a plurality of second electrical regions (221), and every two adjacent second electrical regions (221) are connected by tearable second connecting regions (222).

## Patentansprüche

1. Bürstenloser Motor (100), Folgendes umfassend:
ein Gehäuse (11) mit einer Isolationseigenschaft,
einen Stator (12), der in dem Gehäuse (11) befestigt ist, wobei der Stator (12) einen Statorkern (121) und eine Wicklung (122) umfasst, die um den Statorkern (121) gewickelt ist, und
einen Rotor (13), der drehbar in dem Stator (12) angeordnet ist, wobei der Rotor (13) einen Rotorkern (132) und eine Welle (131) umfasst, die durch den Rotorkern (132) verläuft, wobei auf die Welle (131) an Positionen, die zwei Enden des Rotorkerns (132) entsprechen, entsprechend zwei Lager (14) aufgesetzt sind und an zwei Enden des Gehäuses (11) zwei Lagerhalterungen (15) zum Befestigen der zweiten Lager (14) installiert sind,
wobei
eine erste leitende Platte (21) und eine zweite leitende Platte (22) zwischen mindestens einer der beiden Lagerhalterungen (15) und dem Statorkern (121) angeordnet und dafür gestaltet sind, zusammenzuwirken, um ein Potential eines inneren Rings und ein Potential eines äußeren Rings von jedem der zwei Lager (14) auszugleichen,
die erste leitende Platte (21) und die zweite leitende Platte (22) nebeneinander und voneinander beabstandet ausgerichtet sind und
die erste leitende Platte (21) in elektrischer Verbindung mit dem Statorkern (121) steht und die zweite leitende Platte (22) in elektrischer Verbindung mit einer benachbarten Lagerhalterung (15) steht,
**dadurch gekennzeichnet, dass**:
eine tragende Tafel (16) dafür gestaltet ist, die erste leitende Platte (21) und die zweite leitende Platte (22) zu tragen,
die tragende Tafel (16) an dem Gehäuse (11) befestigt ist,
wobei
die tragende Tafel (16) mit einem leitenden Pad (163) und einem zweiten leitenden Pad (164) versehen ist, wobei das erste leitende Pad (163) elektrisch mit der ersten leitenden Platte (21) verbunden ist und das zweite leitende Pad (164) elektrisch mit der zweiten leitenden Platte (22) verbunden ist,
ein erster elektrischer Kontakt (24) und ein zweiter elektrischer Kontakt (25) an dem Gehäuse (11) installiert sind, wobei der erste elektrische Kontakt (24) dafür gestaltet ist, sich mit dem ersten leitenden Pad (163) zu verbinden, und der zweite elektrische Kontakt (25) dafür gestaltet ist, sich mit dem zweiten leitenden Pad (164) zu verbinden, und
der erste elektrische Kontakt (24) in elektrischer Verbindung mit dem Statorkern (121) steht und
der zweite elektrische Kontakt (25) in elektrischer Verbindung mit der benachbarten Lagerhalterung (15) steht.

2. Bürstenloser Motor (100) nach Anspruch 1, wobei
die tragende Tafel (16) eine Platine (161) ist,
auf der Platine (161) ein Ansteuerungskreis (162) angeordnet ist und
sowohl die erste leitende Platte (21) als auch die zweite leitende Platte (22) von dem Ansteuerungskreis (162) isoliert und getrennt sind.

3. Bürstenloser Motor (100) nach Anspruch 1, wobei die erste leitende Platte (21) und die zweite leitende Platte (22) entsprechend an zwei Seiten der tragenden Platte (16) angebracht sind.

4. Bürstenloser Motor (100) nach Anspruch 1, wobei
an einer Seite der ersten leitenden Platte (21), die der zweiten leitenden Platte (22) zugewandt ist, eine erste Isolationsschicht (215) angeordnet ist und/oder
an einer Seite der zweiten leitenden Platte (22), die der ersten leitenden Platte (21) zugewandt ist, eine zweite Isolationsschicht (225) angeordnet ist.

5. Bürstenloser Motor (100) nach Anspruch 1, wobei
an einer Seite der ersten leitenden Platte (21), die von der zweiten leitenden Platte (22) abgewandt ist, eine erste isolierende Schutzschicht (214) angeordnet ist und/oder
an einer Seite der zweiten leitenden Platte (22), die von der ersten leitenden Platte (21) abgewandt ist, eine zweite isolierende Schutzschicht (224) angeordnet ist.

6. Bürstenloser Motor (100) nach Anspruch 1, wobei der erste elektrische Kontakt (24) Folgendes umfasst:
einen ersten Leiterteil (242), der dafür gestaltet ist, sich mit dem ersten leitenden Pad (163) zu verbinden,
einen ersten elektrische leitenden Teil (243) in Anlageverbindung mit dem Statorkern (121) und
einen ersten Einsetzteil (241) in Verbindung mit dem ersten elektrisch leitenden Teil (243) und dem ersten Leiterteil (242),
wobei der erste Einsetzteil (241) an dem Gehäuse (11) befestigt ist.

7. Bürstenloser Motor (100) nach Anspruch 1, wobei der zweite elektrische Kontakt (25) Folgendes umfasst:
einen zweiten Leiterteil (252), der dafür gestaltet ist, sich mit dem zweiten leitenden Pad (164) zu verbinden,
einen zweiten elektrische leitenden Teil (253) in Anlageverbindung mit der entsprechenden Lagerhalterung (15) und
einen zweiten Einsetzteil (251) in Verbindung mit dem zweiten elektrisch leitenden Teil (253) und dem zweiten Leiterteil (252),
wobei der zweite Einsetzteil (251) an dem Gehäuse (11) befestigt ist.

8. Bürstenloser Motor (100) nach Anspruch 1, wobei
zwischen der ersten leitenden Platte (21) und der zweiten leitenden Platte (22) eine dielektrische Schicht (23) angeordnet ist und die erste leitende Platte (21) und die zweite leitende Platte (22) entsprechend an zwei Seiten der dielektrischen Schicht (23) angeordnet sind und
die erste leitende Platte (21), die zweite leitende Platte (22) und die dielektrische Schicht (23) an der gleichen Seite der tragenden Tafel (16) angeordnet sind.

9. Bürstenloser Motor (100) nach Anspruch 1, wobei
eine dielektrische Schicht (23) zwischen der ersten leitenden Platte (21) und der zweiten leitenden Platte (22) angeordnet ist und die erste leitende Platte (21) und die zweite leitende Platte (22) entsprechen an zwei Seiten der dielektrischen Schicht (23) angeordnet sind und
die erste leitende Platte (21) oder die zweite leitende Platte (22) mittels einer isolierenden Verbindungsschicht an der benachbarten Lagerhalterung (15) angebracht ist.

10. Bürstenloser Motor (100) nach Anspruch 1, wobei der Stator (12) und das Gehäuse (11) zu einer integrierten Struktur in Kunststoff eingekapselt sind.

11. Bürstenloser Motor (100) nach Anspruch 1, wobei
an einer Stirnseite des Statorkerns (121) eine Kunststoffgehäuse-Stirnseite (125) gebildet ist,
eine dielektrische Schicht (23) zwischen der ersten leitenden Platte (21) und der zweiten leitenden Platte (22) angeordnet ist und die erste leitende Platte (21) und die zweite leitende Platte (22) entsprechend an zwei Seiten der dielektrischen Schicht (23) angeordnet sind und
die erste leitende Platte (21) oder die zweite leitende Platte (22) an einer benachbarten Kunststoffgehäuse-Stirnseite (125) angebracht sind.

12. Bürstenloser Motor (100) nach einem der Ansprüche 1 bis 11, wobei die zwei Lagerhalterungen (15) elektrisch verbunden sind.

13. Bürstenloser Motor (100) nach einem der Ansprüche 1 bis 11, wobei
die erste leitende Platte (21) mehrere erste elektrische Regionen (211) umfasst und jeweils zwei benachbarte erste elektrische Regionen (211) durch zerreißbare erste Verbindungsregionen (212) verbunden sind und
die zweite leitende Platte (22) mehrere zweite elektrische Regionen (221) umfasst und jeweils zwei benachbarte zweite elektrische Regionen (221) durch zerreißbare zweite Verbindungsregionen (222) verbunden sind.

## Revendications

1. Moteur sans balai (100), comportant :
un carter (11) ayant des propriétés isolantes ;
un stator (12) fixé à l'intérieur du carter (11), le stator (12) comportant un noyau de stator (121) et un enroulement (122) enroulé autour du noyau de stator (121) ; et
un rotor (13) agencé de manière rotative à l'intérieur du stator (12), le rotor (13) comportant un noyau de rotor (132) et un arbre (131) qui passe au travers du noyau de rotor (132), dans lequel deux roulements (14) sont emmanchés sur l'arbre (131) au niveau de positions qui correspondent aux deux extrémités du noyau de rotor (132), respectivement, et deux supports de roulement (15) sont installés aux deux extrémités du carter (11) à des fins de fixation des deux roulements (14) ;
dans lequel
une première feuille conductrice (21) et une deuxième feuille conductrice (22) sont agencées entre au moins l'un des deux supports de roulement (15) et le noyau de stator (121), et sont configurées pour coopérer afin d'équilibrer un potentiel d'une bague intérieure et un potentiel d'une bague extérieure de chacun des deux roulements (14) ;
la première feuille conductrice (21) et la deuxième feuille conductrice (22) sont alignées côte à côte et espacées l'une de l'autre ; et
la première feuille conductrice (21) est en connexion électrique avec le noyau de stator (121), et la deuxième feuille conductrice (22) est en connexion électrique avec un support de roulement adjacent (15) ;
**caractérisé en ce que** :
une carte de support (16) est configurée pour supporter la première feuille conductrice (21) et la deuxième feuille conductrice (22) ;
la carte de support (16) est fixée au carter (11) ;
dans lequel
la carte de support (16) est dotée d'un premier plot conducteur (163) et d'un deuxième plot conducteur (164), le premier plot conducteur (163) est connecté électriquement à la première feuille conductrice (21), et le deuxième plot conducteur (164) est connecté électriquement à la deuxième feuille conductrice (22) ;
un premier contact électrique (24) et un deuxième contact électrique (25) sont installés au niveau du carter (11), le premier contact électrique (24) est configuré à des fins de connexion au premier plot conducteur (163), et le deuxième contact électrique (25) est configuré à des fins de connexion au deuxième plot conducteur (164) ; et
le premier contact électrique (24) est en connexion électrique avec le noyau de stator (121) ; et
le deuxième contact électrique (25) est en connexion électrique avec le support de roulement adjacent (15).

2. Moteur sans balai (100) selon la revendication 1, dans lequel
la carte de support (16) est une carte de circuit imprimé (161) ;
un circuit d'entraînement (162) est agencé sur la carte de circuit imprimé (161) ; et
la première feuille conductrice (21) et la deuxième feuille conductrice (22) sont toutes les deux isolées et déconnectées du circuit d'entraînement (162).

3. Moteur sans balai (100) selon la revendication 1, dans lequel la première feuille conductrice (21) et la deuxième feuille conductrice (22) sont fixées sur deux côtés de la carte de support (16), respectivement.

4. Moteur sans balai (100) selon la revendication 1, dans lequel
une première couche isolante (215) est agencée sur un côté de la première feuille conductrice (21) qui fait face à la deuxième feuille conductrice (22) ; et/ou
une deuxième couche isolante (225) est agencée sur un côté de la deuxième feuille conductrice (22) qui fait face à la première feuille conductrice (21).

5. Moteur sans balai (100) selon la revendication 1, dans lequel
une première couche de protection isolante (214) est agencée sur un côté de la première feuille conductrice (21) qui fait face à l'opposé de la deuxième feuille conductrice (22) ; et/ou
une deuxième couche de protection isolante (224) est agencée sur un côté de la deuxième feuille conductrice (22) qui fait face à l'opposé de la première feuille conductrice (21).

6. Moteur sans balai (100) selon la revendication 1, dans lequel le premier contact électrique (24) comporte :
une première partie formant conducteur (242), configurée à des fins de connexion au premier plot conducteur (163) ;
une première partie électriquement conductrice (243), en connexion par butée avec le noyau de stator (121) ; et
une première partie d'insertion (241), en connexion avec la première partie électriquement conductrice (243) et la première partie formant conducteur (242) ;
dans lequel la première partie d'insertion (241) est fixée au carter (11).

7. Moteur sans balai (100) selon la revendication 1, dans lequel le deuxième contact électrique (25) comporte :
une deuxième partie formant conducteur (252), configurée à des fins de connexion au deuxième plot conducteur (164) ;
une deuxième partie électriquement conductrice (253), en connexion par butée avec un support de roulement correspondant (15) ; et
une deuxième partie d'insertion (251), en connexion avec la deuxième partie électriquement conductrice (253) et la deuxième partie formant conducteur (252) ;
dans lequel la deuxième partie d'insertion (251) est fixée au carter (11).

8. Moteur sans balai (100) selon la revendication 1, dans lequel
une couche diélectrique (23) est agencée entre la première feuille conductrice (21) et la deuxième feuille conductrice (22), et la première feuille conductrice (21) et la deuxième feuille conductrice (22) sont respectivement agencées sur deux côtés de la couche diélectrique (23) ; et
la première feuille conductrice (21), la deuxième feuille conductrice (22) et la couche diélectrique (23) sont agencées sur un même côté de la carte de support (16).

9. Moteur sans balai (100) selon la revendication 1, dans lequel
une couche diélectrique (23) est agencée entre la première feuille conductrice (21) et la deuxième feuille conductrice (22), et la première feuille conductrice (21) et la deuxième feuille conductrice (22) sont respectivement agencées sur deux côtés de la couche diélectrique (23) ; et
la première feuille conductrice (21) ou la deuxième feuille conductrice (22) est fixée au support de roulement adjacent (15) par le biais d'une couche de connexion isolante.

10. Moteur sans balai (100) selon la revendication 1, dans lequel le stator (12) et le carter (11) sont encapsulés dans du plastique dans une structure intégrée.

11. Moteur sans balai (100) selon la revendication 1, dans lequel
une face d'extrémité de conditionnement en plastique (125) est formée sur une face d'extrémité du noyau de stator (121) ;
une couche diélectrique (23) est agencée entre la première feuille conductrice (21) et la deuxième feuille conductrice (22), et la première feuille conductrice (21) et la deuxième feuille conductrice (22) sont respectivement agencées sur deux côtés de la couche diélectrique (23) ; et
la première feuille conductrice (21) ou la deuxième feuille conductrice (22) est fixée à une face d'extrémité de conditionnement en plastique adjacente (125).

12. Moteur sans balai (100) selon l'une quelconque des revendications 1 à 11, dans lequel les deux supports de roulement (15) sont connectés électriquement.

13. Moteur sans balai (100) selon l'une quelconque des revendications 1 à 11, dans lequel
la première feuille conductrice (21) comporte une pluralité de premières régions électriques (211), et toutes les deux premières régions électriques adjacentes (211) sont connectées par des premières régions de connexion déchirables (212) ; et
la deuxième feuille conductrice (22) comporte une pluralité de deuxièmes régions électriques (221), et toutes les deux deuxièmes régions électriques adjacentes (221) sont connectées par des deuxièmes régions de connexion déchirables (222).
